# EUROPEAN PATENT SPECIFICATION

(11) **EP 0 557 274 B1**
(45) Date of publication and mention of the grant of the patent: **14.09.1994**
(21) Application number: 91900656.9
(22) Date of filing: 14.11.1990
(51) Int. Cl.: C22B 3/30

(54) **RECOVERY OF PALLADIUM**
GEWINNUNG VON PALLADIUM
RECUPERATION DE PALLADIUM

(43) Date of publication of application: 01.09.1993
(73) Proprietor: HENKEL CORPORATION, Ambler, Pennsylvania 19002 (US)
(72) Inventor: FABIANO, Michael D., San Francisco, CA 94102 (US); KORDOSKY, Gary A., Tucson, AZ 85745 (US); MATTISON, Phillip L., Santa Rosa, CA 95404 (US); VIRNIG, Michael J., Santa Rosa, CA 95404 (US); Gruber, Bert, D-5012 Bedburg (DE); Hoagland, Steven M., Lawrenceville, N.J. 08648 (US)
(74) Representative: von Kreisler, Alek, Dipl.-Chem.
(86) International application number: US9006662
(87) International publication number: WO9208813

(56) References cited:
- EP-A- 0 166 151
- GB-A- 1 580 800
- US-A- 3 967 956
- US-A- 4 331 634

## Description

This invention relates to a process for recovery of palladium from aqueous acidic solutions containing palladium by a solvent extraction process and to reagents employed in the process.

During the recovery of precious metals from ore or scrap including spent catalysts, the use of solvent extraction to separate the precious metals from one another and from base metals that may also be present is becoming more widespread. The hydrometallurgical processes employed for the separation and recovery of the platinum group metals (PGMs), e.g. platinum, palladium and rhodium, typically involve dissolving the metal values by some type of oxidative acidic chloride leach, typically with aqua regia or HCl/Cl₂ followed by solvent extraction.

The recovery of palladium from aqueous acidic solutions in the past is also described in U.S. Patents 4,331,634 and 4,578,250. In each of these patents, a process is described in which an aqueous acidic solution, originally acidic or one which may be obtained by adjusting the pH to render it acidic, is contacted with an organic phase comprised of an organic solvent containing an hydroxyoxime or etheroxime extractant. The organic phase is substantially immiscible with the aqueous acidic solution. After all, or a part, of the palladium is extracted from the aqueous acidic solution to the organic phase, the aqueous and organic phases are separated due to their immiscibility. The palladium now present in the organic phase in association with the oxime is then stripped from the organic phase by a second aqueous solution.

The stripping solution employed in the 4,331,634 patent is a strongly acidic solution, such as solutions of sulfuric, hydrochloric, perchloric or nitric acids. The organic phase in this patent may also contain an anionic phase transfer material or catalyst to aid in the extraction of the palladium from the original acidic solution. In the 4,331,634 patent, the oximes employed as extractants for the palladium are hydroxyoximes.

In the 4,578,250 patent, the stripping solution is an aqueous ammonia solution. The 4,578,250 patent utilizes oxime extractants, similar to those of the 4,331,634 patent, but which are however ether oximes in which the hydroxy group of the oximes of the 4,331,634 patent are converted to ether groups. In the 4,578,250 patent, p-substituted phenol is employed to ensure ortho-acylation. The patent states "p-acylation yields material which does not selectively form a complex with the divalent palladium, and which is generally less stable under use conditions." No phase transfer materials are employed in this patent.

Another process for recovering palladium by extraction using an aldoxime, RHC=NOH, can be seen in Japanese Patent Application 61-238,927, laid open October 24, 1986. Similarly, in "Solvent Extraction of Palladium (II) with Nonchelating Oximes with Diffferent Alkyl Chain Lengths", Yoshinari Baba, Katsutashi Inoue, Kazuharu Yoshizuka and Takashi Furusawa, Ind. Eng. Chem. Res., 29, 2111-8, 1990, there is described the use of non-chelating oximes such as dodecanal oxime, decanal oxime, octanal oxime and hexanal oxime. In Japanese Patent Application 63-014,825 and 63-020,423, laid open on January 22, 1988 and January 28, 1988 respectively, the use of aliphatic oximes, such as 2-ethylhexanal oxime, as an accelerator is described in extractions employing phosphate or sulfidic extraction reagents.

Other than in the operating examples, or where otherwise indicated, all numbers expressing quantities of ingredients or reaction conditions used herein are to be understood as modified in all instances by the word "about".

Certain improvements over the processes of the past have now been discovered. With respect to the two patents discussed in the preceding section, each of these teach the need for phenolic functionality, either hydroxyl or the corresponding ether, ortho to the oxime fuctionality. It has been discovered that the ortho-phenolic functionality is not required for the palladium extraction and non-phenolic ketoximes, such as the simple phenone oximes may be employed as extractants for the palladium, and the palladium can be stripped from the organic phase containing the oxime using aqueous ammonia. While not necessary for the extraction, addition of small amounts of amine, such as a quaternary amine will provide improved extraction kinetics. Further, depending on the particular ketoxime, addition of modifiers, such as tridecanol, can be employed to ensure adequate solubility of the palladium complex in the organic solvent phase. The ketoximes employed are particularly selective for palladium. This represents one aspect of the improvement in the process, the details of which will be further discussed hereinafter.

A second aspect of the improvements of the present invention lies in improvement in the process represented by U.S. Patent 4,331,634 earlier discussed, in which hydroxy oximes are employed as extractants for the palladium. This patent teaches the addition of anionic phase transfer catalysts to provide improved extraction performance from HCl aqueous solutions. However, applicants have discovered that when ether oximes as in U.S. Patent 4,575,250 are employed with such anionic phase transfer catalysts, no benefit in stripping of the oximes is observed when the stripping is carried out with aqueous acid as taught by the 4,331,634 patent. It has also been discovered that when aqueous ammoniacal solutions are employed to strip the ether oxime organic phase, the presence of an anionic transfer catalyst, such as a quaternary amine, in the organic phase, surprisingly improves the kinetics of stripping. This is a second aspect of the present invention.

Still another aspect of the present invention, is the discovery of novel ether oxime extractants for the extraction of palladium. These new ether oxime extractants, which may be used in place of the oxime extractants of the past processes, or in the process improvements of the present invention, as discussed above, are prepared by a process involving telomerization of a conjugated alkadiene with alcohols, such as a phenolic aldehyde, in the presence of a palladium catalyst to provide an ether, followed by oximation of the ether to the corresponding oxime. The resulting ether oxime may contain an alkadienyl group ortho to the phenolic ether functionality. Dependent on the starting phenol, the ring may be substituted with other groups.

With respect to the improvement first described above, the preferred non-phenolic oximes, which are non-chelating oximes, useful for extracting palladium (II) chloride from aqueous hydrochloric acid feed, are those having the formula: 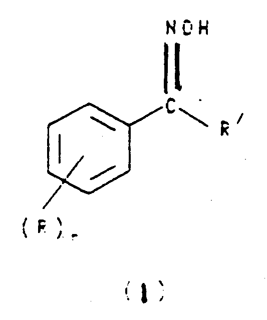
where R is a hydrocarbon, preferably aliphatic, such as an alkyl group, or halogen (preferably Cl), or a meta- or para-alkoxy group, and n is an integer of 0 to 5 and R' is hydrogen or an aliphatic, aromatic, or aliphatic hydrocarbon substituted aromatic group, and when aliphatic may be unsubstituted, or substituted with hydroxy, alkoxy (C₁ to C₄), ester (C₁ to C₄), or nitrile substituents. R' is preferably an alkyl group or on alkyl substituted aromatic group (such as phenyl). The groups R and R' may be branched or straight chain, saturated or unsaturated. The ketoximes preferably have a total number of carbon atoms in the range of about 7 to about 26 carbon atoms, with 12 to 26 being most preferred. The ketoximes employed are substantially water insoluble and soluble in organic solvents, such as the aliphatic or aromatic hydrocarbon solvents described later herein. Dependent on the particular ketoxime employed, the addition of a modifier, such as an alkanol, i.e. tridecanol, may be employed to ensure adequate solubility of the palladium complex in the organic phase. Mixtures of the higher molecular weight ketoximes, those having a total number of carbon atoms of 14 or more, with lower molecular weight ketoximes or aldoximes (where R' is H) having a total number of carbon atoms from about 6 to 12 demonstrate improved extraction and stripping kinetics. The lower molecular weight ketoximes or aldoximes act as a kinetic additive or modifier enabling one to take advantage of the better hydrolytic stability of the higher molecular weight ketoximes without a decrease in extraction kinetics and without loss of selectivity. The ketoximes described above are very selective for palladium. In addition, other kinetic additives or modifiers may be employed along with the ketoxime in the organic phase to result in improved kinetics. Such kinetic additives or catalysts, which find particular utility with the use of the ether oximes in the second embodiment or aspect of the present invention described earlier above, are the anionic phase transfer catalysts, such as the fatty or long chain quaternary ammonium, phosphonium or sulfonium compounds. These onium transfer catalysts will be discussed in more detail hereinafter.

The first embodiment of the invention is a process of recovering palladium according to claim 1.

In the second embodiment of the present invention, novel ether oxime compounds useful in the extraction of palladium according to claim 26 are provided.

These novel ether oximes are prepared by oximation of the corresponding ethers, which are in turn prepared by the 1,3-butadiene telomerization of the corresponding alcohols in the presence of palladium catalysts, such as palladium acetylacetonate, along with a phosphorus catalyst, such as a trialkyl or triaryl phosphine or phosphite. The details of the preparation of such ethers which are oximated, can be seen from copending U.S. application Serial No. 07/517,990 filed May 2, 1990, which in turn is a continuation-in-part application of U.S. application Serial No. 07/347,096 filed May 3, 1989 corresponding to EP-A 0 425 643. As described therein a conjugated diene is telomerized with an alcohol to form dienyl ethers in high yields in the presence of low levels of a palladium catalyst. The amount of catalyst is a function of the amount of conjugated diene which, expressed as the mole ratio of catalyst to diene is in the range of 1:5000 to about 1:150,000, preferably from 1:25,000 to 1:75,000. As noted, a phosphine or phosphite cocatalyst is generally employed along with the palladium catalyst. For the purposes of this invention, the alcohol employed is a phenolic aldehyde, including substituted phenolic aldehydes, preferably- mono- and di- alkyl phenolic aldehydes in which the alkyl groups, branched or linear, saturated or unsaturated, contain up to 24 carbon atoms, preferably 8 to 12 carbon atoms. The phenolic aldehyde may also be substituted with other groups, such as nitro or halogen. The conjugated dienes that are employed in the reaction include the branched or straight chain aliphatic conjugated dienes containing from 4 to 20 carbon atoms, such as 1,3-butadiene, dimethylbutadiene, 1,3-hexadiene, 2,4-hexadiene and 2,4-octadiene, with 1,3-butadiene being preferred. In the reaction the ratio of phenol reactant to conjugated diene is preferably about two moles of diene per mole of alcohol functionality in the phenol. While palladium acetylacetonate [Pd(acac)₂] is the preferred palladium catalyst, bis(allyl) or bis(cyclooctadiene) palladium, and palladium chloride or acetate may be employed. Among the phosphine or phosphite catalysts, triethyl, tributyl or triphenyl phosphine and trimethyl, triethyl or triphenyl phosphite are employed. The most preferred catalysts systems are complexes of acetylcetonate of Pd(II), palladium (II) acetate, or palladium(II) chloride with two equivalents of triphenyl phosphine as a ligand and tetrakis(triphenylphosphine) palladium. The reaction is carried out in an autoclave under pressure at a temperature of 40-100° C, preferably 60-80°C for about 5 to 15 hours. In the commonly assigned application the preparation of the octadienyl ethers of salicylaldehyde is exemplified in Example 7 thereof, the disclosure of which is hereby incorporated by reference.

For the present invention, the salicylaldehyde telomer products, O-octadienyl-salicylaldehyde ether telomers are then oximated employing conventional oximation procedures employing hydroxylamine salts, such as the sulfate or hydrochloride generally described in the related art patent discussed earlier above, using a slight excess (1.05-1.15 equivalents) of the hydroxylamine salt to oximate the carbonyl functionality of the ether product.

In the present invention, novel complexes of certain oximes with palladium (II) chloride are also possible. Such complexes will also find utility in applications such as palladium-selective electrodes.

As described earlier above, the first step of the process comprises extraction of the palladium from an aqueous acidic solution containing the palladium values by contact with an organic phase, which is water insoluble and immiscible, so that the aqueous and organic phases may be physically separated. While ideally the phases are mutually insoluble and immiscible in each other, as a practical matter the phases are substantially insoluble and immiscible, and must be so to the extent necessary to be physically separable, one from the other.

The organic phase is comprised of an organic solvent, water insoluble and immiscible as discussed above, which contains a solvent soluble oxime capable of extracting palladium from the aqueous acidic feed solution. The oximes employed must be more soluble in the organic phase than in the aqueous phase and in this sense are considered water insoluble, as used herein.

As indicated, the oxime is dissolved in a water immiscible organic solvent which comprises the extractant phase into which the palladium is extracted or transferred from the aqueous acidic feed solution.

Any substantially water immiscible liquid solvent can be used for solution of the oxime. Typically the solvents are the aliphatic and aromatic hydrocarbons. Aliphatic hydrocarbons such as alkanes, including cycloalkanes, and halogenated alkanes are suitable. Preferred alkanes have a minimum of five carbon atoms. Preferred halogenated alkanes have a minimum of two carbon atoms. Aromatic hydrocarbons which can be used include benzene, and substituted products such as toluenes, xylenes and cumene. Also suitable as solvents are those esters, ethers, ketones and alcohols which are substantially water immiscible. Furthermore, any blend of these substances or a water immiscible kerosene is also suitable. Preferred organic solvents are the aliphatic hydrocarbons having the flash points of 65.5°C (150°F) and higher and solubilities in water of less than 0.1% by weight. These solvents are chemically inert and the costs thereof are currently within a practical range. Representative commercially available solvents are: Kermac® 470B (an aliphatic kerosene Flash Point, 80°C (175°F)); Kermac® 400-500, an aliphatic kerosene similar to Kermac® 470B having a Flash Point of 83°C (180°F); Chevron® Ion Exchange Solvent (available from Standard Oil of California), Flash Point, 91°C (195°F); Escaid® 100 and 110, Flash Point, 83°C (180°F)); Exxsol® D 80, corresponds to Escaid® 100 ; Norpar® 12 Flash Point, 71°C (160°F)); Aromatic 150 (an aromatic kerosene Flash Point, 65.5°C (150°F); Conoco® C 1214L Flash Point, 71°C (160°F) and various other kerosenes and petroleum fractions from other oil companies.

Modifiers can be added to the solvent in addition to the extractant in order to modify or improve the extraction of the palladium. Substances which are preferred as modifiers are alcohols, straight or branched chain, having from about 10 to 30 carbon atoms, phenols such as the alkyl (8 to 12 carbon atoms) substituted phenols, and branched chain esters containing from 10 to 30 carbon atoms, which can be added to improve extraction, phase separation and/or other important characteristics of the organic solution. When typically employed in the extraction step, the modifier, such as tridecanol will be employed in amounts up to about 18 % in the organic solution.

The amount of oxime in the organic phase is not critical and may vary between wide limits. However, the oxime will be present in an amount of 2-75% by weight of the organic phase, preferably about 5-20%. On a volume basis this will generally be between 1-50%, preferably 5-15%. The concentration should be sufficient to extract the palladium values from the aqueous phase and accordingly the ratio of oxime to metal concentration of at least 2:1 on a molar basis will be employed. However, ratios of less than 2:1 may be employed if it is desired to maximize the palldium loading on the organic phase.

The process will generally be conducted at ambient temperatures and pressures. However, elevated pressures and temperatures may be employed. As a practical matter a temperature of 10-50°C will produce satisfactory results.

The respective volumes of the aqueous and organic phases in the various extraction and stripping steps are generally determined by the individual needs of the systems, such as the type of system and equipment employed, and the relative concentration of the solutions. The organic (O) to aqueous (A) volume ratios can acceptably vary from 1:20 to 20:1. More desirably, an effective range of organic to aqueous (O/A) is 1:5 to 5:1 and commercial systems will preferably employ a ratio of 1:3 to 3:1.

The process contemplates a continuous, countercurrent process in which the organic is recycled for reuse. The process may however be carried out as a batch process.

The organic extractant phase should contact the aqueous metal containing phase for a sufficient length of time to permit entry or transfer of the extracted metal into the organic phase. The time of contact depends on the particular system, the type of equipment used, and upon individual needs and desires. As a general rule however, the contact time between the organic extractant solution and the aqueous solution should be in excess of 0.1 seconds with some equipment, but generally less than 3 hours. Naturally a minimum contact tame is desired, thus a more desirable phase contact time would be in the range of from 5 seconds to 2 hours, while a more preferred contact time is from about 5 seconds to about 1 hour.

After the metal has been extracted or transferred to the organic phase, the two phases are separated by any convenient means for a liquid/liquid phase separation. Representative, but non-exhaustive examples of means for achieving phase separations are: gravity settlers and centrifuges. Generally any system used to separate different liquid phases may be used.

The organic extractant phase, now containing the palladium, and after separation from the aqueous acidic phases, is then contacted with an aqueous ammoniacal solution so as to strip the palladium from the organic phase. The strapped organic, after separation from the aqueous stripping solution, now substantially barren of palladium, is then recycled back for reuse in the extraction of fresh aqueous acidic palladium containing feed. The aqueous stripping solution employed in the present improved process is an aqueous ammoniacal solution. The aqueous ammonia stripping solution is preferably at least about 1N in ammonia, but may vary up to about a 10N solution. An aqueous ammonia solution of about 3N to 6N is desirable. The palladium can then be recovered from the aqueous strip solution in a conventional manner, isolating the palladium as the insoluble Pd(NH₃)₂Cl₂ salt. Procedures, such as reduction, for converting the salt to pure palladium are well known. The insoluble palladium salt can also be precipitated from the palladium loaded aqueous solution by addition of hydrochloric acid thereto.

As indicated earlier, the use of either certain anionic transfer compounds or low molecular weight oximes in the organic phase provides for an improved process when an aqueous ammonia strip solution is employed. The use of the aqueous acidic strip solution employed in U.S. Patent 4,331,634 requires the recovery of the palladium from the aqueous acidic strip solution by extraction onto a solid ion exchange resin, followed by elution of the palladium from the resin using an ammoniacal solution to give the Pd(NH₃)₄⁺² complex, which is then precipitated as the Pd(NH₃)₂Cl₂ salt by addition of hydrochloric acid. The ether oximes of U.S. Patent 4,578,250 are stripped slowly by ammoniacal solutions, and slowly and incompletely by aqueous acid. By contrast, the present invention allows the palladium to be stripped rapidly and completely from the organic phase directly into an ammoniacal strip solution, without the intermediate steps of aqueous acid strip and ion exchange resin extraction.

The anionic phase transfer compounds or catalysts used in the present invention are the fatty or long chain (8 to 22 carbon atoms) quaternary ammonium, phosphonium and sulfonium compounds. The preferred compounds are the quaternary ammonium compounds.

The quaternary ammonium compounds are those having a total of at least 18, and preferably 25 carbon atoms, preferably those having a quaternary ammonium ion of the formula 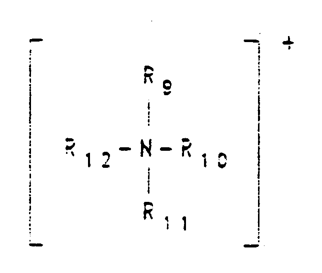
where R₉, R₁₀, R₁₁ and R₁₂ individually are aliphatic, araliphatic or aromatic hydrocarbon groups containing from 1 to about 22 carbon atoms and where R₉, R₁₀, R₁₁ and R₁₂ together have a minimum of at least 19, and preferably 25, carbon atoms, and where at least three of the four R groups have at least 4 carbon atoms. The anion portion of the quaternary will generally be the chloride or the sulfate. The methyltri(C₈-C₁₀) ammonium chloride is available commercially as ALIQUAT® 336. Other quaternary compounds are derived from tertiary amines containing at least 18 carbon atoms, which have been quaternized in conventional manner so as to contain a methyl group in addition to those contained in the tertiary amines.

Where employed, the anionic phase transfer compounds must also be soluble in the organic phase and insoluble in the aqueous solutions, similar to the oxime extractants. In general compounds having a molecular weight below about 200 will be too soluble in the aqueous solutions and accordingly those compounds having a molecular weight above 200, and preferably above 300 are preferred. The phase transfer agents should be present for purposes of the invention at a level of from about 4 mole % up to about 20 mole % relative to the oxime, with the most preferred level being in the range of 7 to 13 mole %.

The improvement of the present invention can best be illustrated by the following examples, which serve to illustrate, but not limit, the invention. All parts and percentages are by weight unless otherwise noted.

In the first set of examples, the recovery of palladium from aqueous acidic chloride solutions with ketoximes is illustrated. The ketoximes employed are
n-butyrophenone oxime
2',4'-dimethylacetophenone oxime
isobutyrophenone oxime
p-(n-butyl) isobutyrophenone oxime
p-amylpropiophenone oxime
p-amylisobutyrophenone oxime
p-amyl(2-ethylhexano)phenone oxime
p-dodecylacetophenone oxime
p-dodecylpropiophenone oxime
p-dodecylisobutyrophenone oxime
p-dodecyl(2-ethylhexano)phenone oxime.

The oximes above were prepared from the corresponding ketone or aldehyde by oximation using hydroxylamine hydrochloride.

The following ketones were purchased from Aldrich, and then oximated:
4-Methylpropiophenone
n-Butyrophenone
Isobutyrophenone
2',4'-Dimethylacetophenone
and the aldehyde, 2-Ethylhexanaldehyde.

The remaining ketones were prepared by Friedel-Crafts acylation of the alkylbenzene by the acid chloride, using aluminum chloride as catalyst. These ketones include:
p-Dodecylacetophenone
p-Dodecylpropiophenone
p-Dodecylisobutyrophenone
p-Dodecyl(2-ethylhexano)phenone
p-Amylpropiophenone
p-Amylisobutyrophenone
p-Amyl(2-ethylhexano)phenone
p-(n-Butyl)isobutyrophenone.
Other ketones were similarly prepared.

As an example of this preparation, the following procedure describes the synthesis of dodecylpropiophenone, as well as the conversion of the ketone to the oxime.

### Example A

### Preparation of p-Dodecylpropiophenone

96.0 g (0.72 moles) of anhydrous aluminum chloride was added to a 1 l flask equipped with a stirrer, thermometer, and an addition funnel. 250 ml of carbon tetrachloride was added followed by 68.4 g (0.74 moles) of propionyl chloride from a pipette. This reaction mixture was cooled to 5±3°C and 153.9 g (0.625 mole) of "soft" dodecylbenzene (Dodane® S, was then added over a 3 hour period while the temperature was maintained at 5±3°C. The reaction was held at this temperature for an additional hour at which point approximately 500 ml of 10% HCl was slowly added with the temperature kept below 15°C.

The reaction mixture was then washed 3 times with 5% HCl, once with water and the solvent stripped under vacuum. The residue was taken up in toluene and washed twice with 5% NaOH, once with water, once with dil. HCl, once with water and then stripped to give 192.0 g of a light brown, fluid oil.

The above product was distilled through a 30,5 cm [12"] Vigreaux column to give 141.6 g of heart cut boiling at 140-152°C at 13.3 to 20 Pa (0.1-0.15 mm. Hg.)

### Preparation of p-Dodecylpropiophenone Oxime

30.2 g (0.1 mole) of the above ketone, 10.4 g (0.15 mole) of hydroxylamine hydrochloride, 14.8 g of anhydrous sodium acetate, and 50 ml of absolute methanol were combined in a flask equipped with a stirrer and a reflux condenser. The reaction mixture was refluxed for 4 hours, poured into water, extracted into ether, washed 3 times with water, and the solvent stripped to give 31.0 g of light yellow oil. FTIR analysis showed no residual ketone.

Following the same typical procedure described above, the other oximes noted were prepared and evaluated in the extraction of palladium.

### Example 1

The organic phase was prepared by dissolving sufficient reagent in the indicated solvent system to give a reagent concentration of 0.05 M. The aqueous feed solution was prepared by dissolving sodium tetrachloropalladium (II) in 1 M hydrochloric acid. Equal volumes of the aqueous feed solution and organic phase were then placed in a separatory funnel and shaken for four hours. The phases were then separated. The aqueous raffinate was then filtered and analyzed along with a sample of the aqueous feed solution for palladium concentration by atomic absorption spectroscopy. The results of Pd extraction with the following reagents are summarized in Table 1 below.

**Table 1**

| Pd Extraction | | | | |
|---|---|---|---|---|
| | | Aq. Pd. Conc. | | |
| Reagent | Solvent* | Feed (ppm) | Raff. (ppm) | % Pd Extracted |
| n-Butyrophenone oxime | 100 g/l TDA/Arom 150 | 1960 | 276 | 86 |
| 2',4'-Dimethylacetophenone oxime | 100 g/l TDA/Arom 150 | 1960 | 4 | 99.8 |
| Isobutyrophenone oxime | 100 g/l TDA/Arom 150 | 1960 | 3 | 99.8 |
| p-(n-Butyl)isobutyrophenone oxime | 100 g/l TDA/Arom 150 | 2510 | 965 | 61.5 |
| p-(n-Butyl)isobutyrophenone oxime | 15 g/l TDA/Escaid® 110 | 2450 | 873 | 64.4 |
| p-Dodecylacetophenone oxime | 100 g/l TDA/Arom 150 | 2480 | 2150 | 13.3 |
| p-Dodecylpropriophenone oxime | 100 g/l TDA/Arom 150 | 2480 | 2120 | 14.5 |
| p-Dodecylpropriophenone oxime | 100 g/l TDA/Arom 150 | 2600 | 1740 | 33.1 |
| p-Dodecyl(2-ethylhexano)phenone oxime | 100 g/l TDA/Arom 150 | 2600 | 913 | 64.9 |
| p-Dodecylisobutyrophenone oxime | 100 g/l TDA/Arom 150 | 2600 | 977 | 62.4 |
| p-Amylpropiophenone oxime | 100 g/l TDA/Arom 150 | 2460 | 1890 | 23.1 |
| p-Amylpropiophenone oxime | 15 g/l TDA/Escaid® 110 | 2460 | 1380 | 44.0 |
| p-Amyl(2-ethylhexano)phenone | 100 g/l TDA/Arom 150 | 2430 | 1940 | 20.2 |
| p-Amyl(2-ethylhexano)phenone oxime | 15 g/l TDA/Escaid® 110 | 2430 | 1250 | 48.6 |
| p-Amylisobutyrophenone oxime | 15 g/l TDA/Escaid® 110 | 2470 | 318 | 87.1 |

| | | | | |
|---|---|---|---|---|
| *TDA = tridecanol Arom 150 = Aromatic 150 kerosene (Exxon-USA) | | | | |

In the following example, stripping of the palladium was evaluated.

### Example 2

The palladium loaded organic phases, which were prepared in the same fashion as described for Table 1, were contacted with an equal volume of 5 M aqueous ammonia by shaking in a separatory funnel for four hours. The phases were then separated. The aqueous raffinate was then filtered and analyzed for palladium concentration by atomic absorption spectroscopy. The results are shown in the following Table 2.

**Table 2**

| Pd Stripping | | | | |
|---|---|---|---|---|
| | | Pd Concentration | | |
| Reagent | Solvent | Org Feed (ppm) | Aq. Raff. (ppm) | %Pd Stripped |
| n-Butyrophenone oxime | 100 g/l TDA/Arom 150 | 1684 | 1670 | 99.2 |
| 2',4'-Dimethylacetophenone oxime | 100 g/l TDA/Arom 150 | 1956 | 1920 | 98.2 |
| Isobutyrophenone oxime | 100 g/l TDA/Arom 150 | 1957 | 1930 | 98.6 |
| p-(n-Butyl)isobutyrophenone oxime | 15 g/l TDA/Escaid® 110 | 1577 | 1240 | 78.6 |
| p-Dodecylacetophenone oxime | 100 g/l TDA/Arom 150 | 330 | 247 | 74.8 |
| p-Dodecylpropriophenone oxime | 100 g/l TDA/Arom 150 | 360 | 351 | 97.5 |
| p-Dodecyl(2-ethylhexano)phenone oxime | 100 g/l TDA/Arom 150 | 1200 | 1180 | 98.3 |

### Example 3

In this example, palladium selectivity is illustrated.

**Table 3**

| Pd Selectivity | | | | | | |
|---|---|---|---|---|---|---|
| | Metal Concentration | | | | | |
| Reagent | Aq. Soln. | Pd (ppm) | Pt (ppm) | Cu (ppm) | Fe (ppm) | Ni (ppm) |
| 1. p-Dodecylpropiophenone oxime | Feed | 888 | 2060 | 2320 | 2230 | 2150 |
| | Raff. | 647 | 2060 | 2290 | 2210 | 2130 |
| 2. p-Dodecylisobutyrophenone oxime | Feed | 888 | 2060 | 2320 | 2230 | 2150 |
| | Raff. | 579 | 2040 | 2310 | 2250 | 2150 |
| 3. p-Dodecyl(2-ethylhexano)phenone oxime | Feed | 888 | 2060 | 2320 | 2230 | 2150 |
| | Raff. | 585 | 2050 | 2310 | 2250 | 2150 |
| 4. p-(n-Butyl)isobutyrophenone oxime | Feed | 872 | 1810 | 2290 | 2240 | 2180 |
| | Raff. | 256 | 1770 | 2270 | 2220 | 2190 |
| 5. p-(n-Butyl)isobutyrophenone oxime | Feed | 1070 | 2340 | 2130 | 2130 | --- |
| | Raff. | 1.9 | 2330 | 2110 | 2140 | --- |

The experiments summarized in Table 3 were carried out in the following fashion: A solution of the reagent 0.05 M in either Aromatic 150 containing 100 g/l tridecanol (Examples 1-4) or Escaid® 110 containing 15 g/l tridecanol (Example 5) was contacted with an aqueous feed solution containing Pd⁺², Pt⁺⁴, Cu⁺², Fe⁺³, and Ni⁺² (as chlorides) dissolved in 1 M hydrochloric acid at an O/A of 1 by shaking for 4 hr. The phases were allowed to separate. The aqueous raffinate phase was then filtered and analyzed along with a sample of the aqueous feed solution for individual metal concentrations by atomic absorption spectroscopy.

### Example 4

In this example, the effect of a quaternary ammonium compound, ALIQUAT® 336, on palladium extraction using p-(n-butyl)isobutyrophenone oxime was studied, with the following results.

**Table 4**

| Effect of Aliquat® 336 Concentration on Pd Extraction by p-(n-Butyl)-isobutyrophenone Oxime | | | |
|---|---|---|---|
| Aliquat® 336 Conc. | Pd. Conc. | | |
| | Aq. feed (ppm) | Aq. Raff. (ppm) | % Pd Extracted |
| 0 | 2450 | 873 | 64.4 |
| 0.002 M | 2450 | 7.1 | 99.7 |
| 0.005 M | 2450 | 4.4 | 99.8 |

The experiments summarized in Table 4 were carried out in the following fashion: Organic solutions were prepared containing different levels of Aliquat® 336 in a 0.05 M solution of the oxime in Escaid 110 containing 15 gpl tridecanol. The extractions were then performed in the same fashion as previously described for the experiments summarized in Table 1 with the exception that contact times were only 15 minutes.

### Example 5

In this example, the effect of the same quaternary ammonium compound above on palladium selectivity using the same oxime above, was studied with the following results.

**Table 5**

| Effect of Aliquat® 336 on Pd Selectivity by p-(n-Butyl)isobutyrophenone Oxime | | | | |
|---|---|---|---|---|
| | Aqueous Raffinate Metal Concentration | | | |
| Aliquat 336 Conc. (M) | Pd (ppm) | Pt (ppm) | Cu (ppm) | Fe (ppm) |
| 0 | 1.9 | 2330 | 2110 | 2140 |
| 0.002 M | 0.6 | 2190 | 2120 | 2130 |
| 0.005 M | 0.5 | 1830 | 2110 | 2110 |
| Aqueous Feed | 1070 | 2340 | 2130 | 2130 |

The experiments summarized in Table 5 were carried out in the following fashion: Differing amounts of Aliquat® 336 were dissolved in a 0.05 M solution of the oxime in Escaid® 110 containing 15 g/l tridecanol to give Aliquat® 336 concentrations of 0.002 M and 0.005 M. The experiments were then carried out in the same fashion as previously described for the experiments summarized in Table 3.

The foregoing examples illustrate that palladium(II) chloride can be extracted by contacting an aqueous hydrochloric acid feed solution with an organic phase consisting of a ketoxime dissolved in a kerosene, e.g., Escaid® 110, a largely aliphatic kerosene, or Aromatic 150, a largely aromatic kerosene (see Table 1). Addition of a solvent modifier, such as tridecanol, to the kerosene insures adequate solubility of the palladium complex in the organic phase. The palladium can then be recovered from the organic phase by stripping with aqueous ammonia (see Table 2). The ketoximes are very selective for palladium as evidenced by the data in Table 3. Addition of small amounts of a quaternary amine such as Aliquat 336 to the organic phase result in improved extraction kinetics as can be seen from the data in Table 4. The use of a quaternary amine to improve the extraction kinetics leads to some loss in selectivity for Pd over Pt as can be seen in Table 5. However, selectivity for palladium over platinum is still excellent, despite conditions which favor low selectivity, i.e. the presence of about twice as much platinum as palladium, and the use of a large excess of oxime reagent over palladium.

The foregoing examples also illustrate that a phenolic hydroxyl or ether functionality ortho to the oxime functionality is not required as taught in U.S. Patent 4,578,250 and that ketoximes of the formula 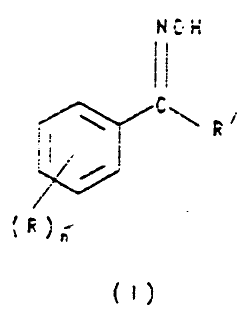
may be employed in the recovery of palladium, where R, R' and n are as previously defined.

Improved extraction kinetics are achieved by the use of a mixture of higher molecular weight ketoximes or aldoximes and lower molecular weight oxides. The lower molecular weight oximes must be sufficiently high in molecular weight so that they are not overly soluble in the aqueous phase and lost; however, they must also be low enough in molecular weight to possess significant surface activity. Monofunctional ketoximes and aldoximes having 6-12 carbon atoms represent lower molecular weight oximes having the desired blend of properties for use with higher molecular weight ketoximes having a total of 14 or more carbon atoms.

In the earlier discussion of the use of mixtures of higher and lower molecular weight oximes, those lower molecular-weight ketoximes and aldoximes; corresponding to the Formulae (I) and (II), were included, which contain an aromatic ring. However, it is to be understood that suitable lower molecular weight oximes, which may be employed if they meet the solubility requirements discussed, also include the aliphatic ketoximes and aldoximes containing 6-12 carbon atoms, in which the aliphatic group may be straight or branched chain, saturated or unsaturated, hydrocarbon, unsubstituted or substituted with groups which do not adversely affect the solubility requirements. The following example serves to illustrate the use of a mixture of lower molecular weight oximes and higher molecular weight ketoximes.

### Example 6

Organic solutions were prepared containing 0.05 mM of dodecylpropriophenone oxime and either no addition of kinetic modifier or with the addition of 0.005 mM of either 2-ethylhexanaldoxime or 4-methylpropriophenone oxime in Escaid® 110 containing 100 g/l of tridecanol.

A 125 ml portion of a 1 M HCl solution containing 2430 ppm of palladium (II) was placed in a plexiglas mixer box 9.1 cm (3.6 inches) high by 6.35 cm (2.5 inches) (i.d.) square. The mixing impeller 3.8 cm (1.5 inches in diameter) was then positioned just above the surface of the aqueous phase and 125 ml of the organic phase was poured carefully onto the surface of the aqueous phase in such a way as to minimize pre-mixing of the phases. The stirrer, which had been preset at 2000 rpm, was then started and 15 ml samples of the emulsion were removed at 5, 15, 30, 60, and 120 minutes. The samples were placed in a separatory funnel and the phases were allowed to separate. The aqueous phase was then filtered and analyzed by atomic absorption spectroscopy for palladium content. The results are summarized in the attached Table 6.

**Table 6**

| Summary of Palladium Extraction Kinetics by Dodecylpropiophenone Oxime | | | |
|---|---|---|---|
| | Kinetic Modifier | | |
| | None | 2-Ethylhexanaldoxime (0.005 mM) | 4-Methylpropiophenone oxime (0.005 mM) |
| Time (min) | [Pd] org. (ppm) | [Pd] org. (ppm) | [Pd] org. (ppm) |
| 5 | 50 | 310 | 130 |
| 15 | 40 | 480 | 360 |
| 30 | 100 | 630 | 630 |
| 60 | 170 | 810 | 800 |
| 120 | 320 | 990 | 1170 |

As noted earlier, U.S. 4,331,634 teaches that addition of an anionic phase transfer material to an organic phase containing an oxime extractant results in an improved process for the extraction of palladium from acidic aqueous solutions and then subsequent stripping with a strong acid solution. In contrast to this work, it was found that while addition of an anionic phase transfer agent, such as Alamine® 336 [tri(C₈-C₁₀)amine, or Aliquat® 336, with ether oximes and certain simple oximes leads to improved extraction performance from aqueous HCl, one sees no benefit in stripping these oximes with aqueous acid. This is very surprising since one would expect the anionic phase transfer agents to improve the reverse reaction also. Even more surprising is the fact that these quaternary ammonium phase transfer agents improve the kinetics of stripping with aqueous ammonia, as shown in example 7 which follows below. Further data illustrating the improvement in extraction and stripping are summarized in the following Examples 8 and 9. Table 9B shows that added tertiary amine gives an initially improved stripping rate, but fails to reach completion. By contrast, added quaternary ammonium compound gives greatly enhanced stripping kinetics as well as complete stripping.

### Example 7

For comparative stripping tests with aqueous hydrochloric acid and aqueous ammonia, loaded organic solutions were prepared in the following fashion. A 50 mM solution of the oxime in Aromatic 150 Kerosene containing 5 mM of Aliquat® 336 and 100 g/l of tridecanol as a phase modifier was contacted with an equal volume of an aqueous hydrochloric acid solution (pH 1.0) containing 2 g/l of palladium by shaking for 2 hr. After shaking, the phases were allowed to separate. Each phase was then filtered and analyzed by atomic absorption spectroscopy. The loaded organic phases contained approximately 2 g/l of palladium.

The stripping tests were carried out as follows: The aqueous phase (80 ml), either 6 N hydrochloric acid or 5M ammonia, was placed in the mixer box described in Figure 1. An equal volume of a palladium loaded organic solution was then carefully poured on top of the aqueous phase in such a fashion as to avoid disturbing the interphase. The phases were then mixed using an overhead stirrer set at 2000 rpm. Samples were removed at timed intervals while stirring. Each sample was placed in a separatory funnel and allowed to separate. Each phase was then filtered and analyzed by atomic absorption spectroscopy for palladium content.

Tests were carried out with 2-octadienyloxy benzaldoxime (OBO) or 2-methoxy-5-dodecylbenzaldoxime (MDBO). The results are summarized in the following Table.

**Table 7**

| Comparison of Stripping with Aqueous HCl and NH₃ in the Presence of Aliquat® 336 | | | | |
|---|---|---|---|---|
| Oxime | OBO | | MDBO | |
| Stripping Agent | HCl | NH₃ | HCl | NH₃ |
| Time (min) | % Palladium Stripped | | | |
| 0 | 0.0 | 0.0 | 0.0 | 0.0 |
| 1 | 6.3 | 24.3 | 3.6 | 40.5 |
| 2 | 7.2 | 38.2 | 3.9 | 43.3 |
| 5 | 8.1 | 39.2 | 4.1 | 47.3 |
| 15 | 8.2 | 57.9 | 3.7 | 49.6 |
| 30 | 12.3 | 71.3 | 3.4 | 50.4 |
| 60 | 12.8 | 78.1 | 3.3 | 53.4 |
| 120 | 12.8 | 98.9 | 3.3 | 60.7 |

### Example 8

Comparative extraction kinetics tests were carried out as follows: A 50 mM solution of the oxime in either Escaid® 110 or Aromatic 150 kerosene containing 50-200 g/l of tridecanol as phase modifier was prepared. In experiments involving either Alamine® 336 or Aliquat® 336, sufficient Alamine® 336 or Aliquat® 336 was added to the oxime solution to give a concentration of 5 mM of either Alamine® 336 or Aliquat® 336.

The aqueous palladium feed solution (80 ml), ca 1 g/l Pd in aqueous hydrochloric aid (pH 1.0) was placed in a mixer box (Figure 1). The organic solution (80 ml) was then carefully poured on top of aqueous phase in such a fashion as to minimize mixing. The phases were then mixed at 2000 rpm using an overhead stirrer and samples were removed at timed intervals. Each sample was placed in a separatory funnel and allowed to separate. Each phase when then filtered and analyzed by atomic absorption spectroscopy for palladium content.

Tests were carried out with 2-octadienyloxybenzaldoxime (OBO) or 2-methoxy-5-dodecylbenzaldoxime (MDBO). The results are summarized in the following Tables.

**Table 8 A**

| Kinetics of Pd Extraction for MDBO | | |
|---|---|---|
| Kinetic Modifier | None | Aliquat® 336 |
| Time (min) | % Palladium Extracted | |
| 0 | 0 | 0 |
| 1 | 3.4 | 82.3 |
| 2 | 8.5 | 91.9 |
| 5 | 12.7 | 97.0 |
| 15 | 22.1 | 97.7 |
| 30 | 31.0 | 97.7 |
| 60 | 44.9 | 97.7 |
| 120 | 59.9 | 97.7 |

**Table 8B**

| Kinetics of Pd Extraction for OBO | | | |
|---|---|---|---|
| Kinetic Modifier | None | Aliquat® 336 | Alamine® 336 |
| Time (min) | % Palladium Extracted | | |
| 0 | 0 | 0 | 0 |
| 1 | 10.2 | 83.3 | 76.6 |
| 2 | 16.4 | 93.9 | 89.5 |
| 5 | 29.0 | 98.1 | 96.1 |
| 15 | 51.3 | 98.3 | 96.1 |
| 30 | 69.2 | 98.3 | 96.1 |
| 60 | 83.5 | 98.3 | 96.1 |
| 120 | 88.3 | 98.3 | 96.1 |

### Example 9

Comparative strapping kinetics tests were carried out in a similar fashion as to that described in Example 1. In experiments involving either Alamine® 336 or Aliquat® 336, sufficient Alamine® 336 or Aliquat® 336 was added to the oxime solution to give a concentration of 5 mM of either Alamine® 336 or Aliquat® 336. In all cases, the aqueous stripping phase consisted of a 5 M ammonia solution.

Tests were carried out with 2-octadienyloxybenzaldoxime (OBO) or 2-methoxy-5-dodecylbenzaldoxime (MDBO).

**Table 9 A**

| Kinetics of Pd Stripping for MDBO | | |
|---|---|---|
| Kinetic Modifier | None | Aliquat® 336 |
| Time (min) | % Pd Stripped | |
| 0 | 0.0 | 0.0 |
| 1 | 40.5 | 69.5 |
| 2 | 43.3 | 71.4 |
| 5 | 47.3 | 74.1 |
| 15 | 49.6 | 74.5 |
| 30 | 50.4 | 74.5 |
| 60 | 53.4 | 77.3 |
| 120 | 60.7 | 77.3 |

**Table 9 B**

| Kinetics of Pd Stripping for OBO | | | |
|---|---|---|---|
| Kinetic Modifier | None | Aliquat® 336 | Alamine® 336 |
| Time (min) | % Pd Stripped | | |
| 0 | 0 | 0 | 0 |
| 1 | 24.3 | 89.8 | 46.8 |
| 2 | 38.2 | 93.8 | ---- |
| 5 | 39.2 | 93.8 | 63.6 |
| 15 | 57.9 | 94.7 | 63.6 |
| 30 | 71.3 | 95.6 | 63.6 |
| 60 | 78.1 | 97.3 | 66.3 |
| 120 | 98.9 | 100 | 70.5 |

In the standard procedures to obtain ether oximes from acylated phenols, the phenol is alkylated by appropriate alkylating agents such as an alkylhalide as described in U.S. Patent 4,578,250 followed by oximation of the carbonyl portion of the resulting ether. It was found that novel oximes useful in palladium recovery are prepared by oximation of products resulting from the butadiene telomerization reaction to the etherification of phenols as described earlier. The reaction is particularly applicable to the preparation of oximes of octadienyl ethers of salicylaldehyde to provide oximes having the formula 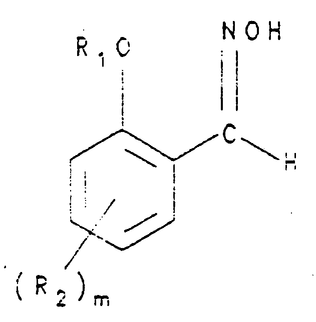
where R₁ and R₂ and m are as earlier defined. Where R₁ and R₂ are the same alkadienyl groups, such as octadienyl and m is 1, the resulting product may be represented by the formula 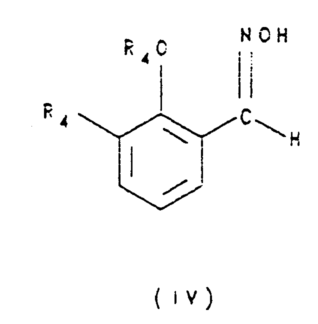
where R₄ is an alkadienyl group containing from 8 to 16 carbon atoms, preferably the octadienyl group. When m is 0 the resulting product is 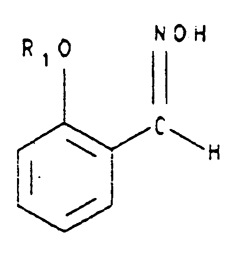
the octadienyloxy ether of salicylaldoxime.

The following example 10 illustrates the preparation of the salicylaldoxime.

### Example 10

A 75 ml capacity, two-port steel autoclave, containing a magnetic stirring bar and fitted with a pressure gauge, was charged with Pd(acac)₂ (30.5 mg, 0.100 mmol), triphenylphosphine (52.5 mg, 0.200 mmol), and salicyl aldehyde (12.2 g, 0.100 mmol). The air in the autoclave was replaced with nitrogen by three pump/purge cycles (evacuation to ≈26,7 Pa (≈0.2 torr) and bleeding N₂ back in to ambient pressure) while the reactants were mixed by stirring. The apparatus was cooled to -70°C and butadiene (≈17 ml, 240 mmol) was introduced into the autoclave while N₂ was swept over the top of the reactants and out of the opening. The autoclave was sealed and the mixture was allowed to warm to ambient temperature before being placed in an oil bath heated to 50°C. The reaction mixture was stirred at this temperature for a period of 12 h. The unreacted butadiene was vented and GC analysis of the crude product showed a product distribution of 19% branched phenol ether, 61% linear phenol ether and 14% telomer products that were formed by reaction with the aldehyde group. Distillation of the telomer product mixture at reduced pressure results in partial Claisen rearrangement of the ether to the ring-alkylated products mentioned above. Part of the crude telomer mixture (15 9) was dissolved in 100 ml of MeOH. Hydroxylamine sulfate (7.8 g, 0.95 mol) and sodium acetate (8.0 g, 0.10 mole) were added to the solution and the mixture was left to stir at ambient temperature overnight. The reaction mixture was poured into 250 ml of water and extracted with 50 ml of 1:4 ether-pentane (two times). The combined organic extracts were washed with brine and dried over MgSO₄. Concentration afforded 16.2 g of the crude oxime. The presence of oxime functionality was confirmed by GC·IR analysis.

The crude oxime mixture was tested for palladium extraction properties in the same manner as earlier described and showed an enhanced extraction rate compared to corresponding oximes wherein R₂ is nonyl or dodecyl, and R₁ is methyl.

## Claims

1. A process for the recovery of palladium from an aqueous acidic solution thereof comprising:
(a) contacting the palladium containing aqueous acidic solution with a solution of a water insoluble oxime compound in a water insoluble and immiscible organic solvent for a sufficient time to extract and transfer said palladium values from said aqueous solution forming two phases, an organic phase (I) containing said palladium values and an aqueous phase (II), wherein said oxime is a non-phenolic aryl oxime having the formula I 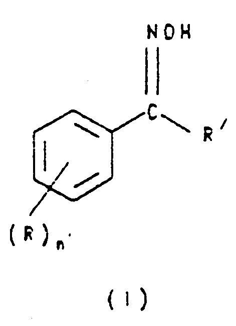 where R is a hydrocarbon group, halogen, or meta- or para- alkoxy group, n is an integer of 0 to 5, and R' is hydrogen, an aliphatic or aromatic hydrocarbon or aliphatic substituted aromatic group, and when aliphatic is unsubstituted or substituted with an hydroxy, alkoxy, ester or nitrile substitutent, and the total number of carbon atoms in said oxime is from 7 to 26;
or an ether oxime having the formula 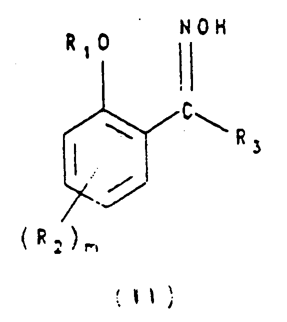 where R₁ is a saturated or unsaturated hydrocarbon group, R₂ is a hydrocarbon group, halogen, or meta or para alkoxy group, m is an integer from 0 to 4, and R₃ is hydrogen, an aliphatic or aromatic hydrocarbon or aliphatic substituted aromatic group, and when aliphatic is unsubstituted or substituted with an hydroxy, alkoxy, ester or nitrile substitutent, the total number of carbon atoms in R₁, R₂ and R₃ being at least 8, and when R₁ is other than unsaturated, said organic solvent further contains a lower molecular weight oxime having 6 to 12 carbon atoms or an anionic phase transfer agent;
(b) separating the immiscible organic phase (I) from said aqueous phase (II);
(c) contacting the organic phase (I) with an aqueous ammonia solution whereby said palladium values are removed or extracted from said organic phase (I) into said aqueous ammonia solution (III);
(d) separating said organic phase (I) from said aqueous ammonia solution (III); and
(e) recovering said palladium values from said aqueous ammonia solution (III).

2. A process as defined in claim 1, wherein said organic phase (I) of step (b) is washed prior to step (c).

3. A process as defined in claim 1 in which said water insoluble and immiscible organic solvent is an aliphatic or aromatic hydrocarbon.

4. A process as defined in claim 3 wherein said organic solvent is kerosene.

5. A process as defined in claim 1 wherein the total number of carbon atoms in said non-phenolic oxime is 12 to 26.

6. A process as defined in claim 1 wherein R' is an alkyl group having from 1 to 8 carbon atoms and R is an alkyl group having from 1 to 12 carbon atoms.

7. A process as defined in claim 6 wherein said non-phenolic oxime is selected from the group consisting of
n-butyrophenone oxime
2',4'-dimethylacetophenone oxime
isobutyrophenone oxime
p-(n-butyl)isobutyrophenone oxime
p-amylpropiophenone oxime
p-amylisobutyrophenone oxime
p-amyl(2-ethylhexano)phenone oxime
p-dodecylacetophenone oxime
p-dodecylpropriophenone oxime
p-dodecylisobutyrophenone oxime
p-dodecyl(2-ethylhexano)phenone oxime.

8. A process as defined in claim 1 or 6 wherein said organic solvent further contains a modifier selected from the group consisting of alcohols, phenols and branched chain esters having from about 8 to 30 carbon atoms.

9. A process as defined in claim 8 wherein said modifier is tridecanol.

10. A process as defined in claim 6 wherein said organic solvent further contains an anionic phase transfer agent selected from the group consisting of quaternary ammonium, phosphonium and sulfonium compounds.

11. A process as defined in claim 1 or 10 wherein said anionic transfer agent is a quaternary ammonium compound having a quaternary ammonium ion of the formula 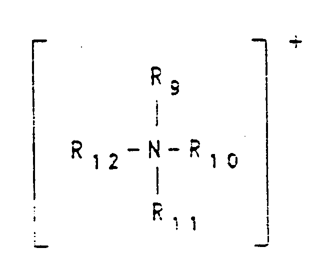 where R₉, R₁₀, R₁₁ and R₁₂ individually are aliphatic, araliphatic or aromatic hydrocarbon groups having from 1 to 22 carbon atoms and where the four groups together have a minimum of at least 19 carbon atoms and where at least three of the four groups have at least 4 carbon atoms.

12. A process as defined in claim 11 wherein said quaternary ammonium compound is methyltri(C₈-C₁₀) ammonium chloride.

13. A process as defined in claim 1 wherein said non-phenolic oxime contains a total of at least 14 carbon and said organic solvent further contains a lower molecular weight ketoxime or aldoxime having from 7 to 12 carbon atoms.

14. A process as defined in claim 13, wherein said lower molecular weight oxime is 2-ethylhexanaldoxime or 4-methylpropiophenone oxime.

15. A process as defined in claim 1 wherein the total number of carbon atoms in groups R₁, R₂ and R₃ is 8 to 24.

16. A process as defined in claim 1 wherein R₂ is an alkyl or alkadienyl group having from 8 to 16 carbon atoms, R₁ is an alkyl group having from 1 to 16 carbon atoms or an alkadienyl group having 8 to 16 carbon atoms and R₃ is hydrogen or an alkyl group having from 1 to 4 carbon atoms.

17. A process as defined in claim 16 wherein R₁ is methyl, R₂ is nonyl or dodecyl, and R₃ is H or methyl.

18. A process as defined in claim 16 wherein R₁ is octadienyl, m is 0 and R₃ is H.

19. A process as defined in claim 16 wherein R₁ and R₂ are octadienyl groups, R₃ is H, R₂ is in a position ortho relative to the R₁O group, and m = 1.

20. A process as defined in claim 16 wherein R₁ is octadienyl, R₂ is an alkyl group having from 8 to 12 carbon atoms, m is 1, and R₃ is H or an alkyl group having 1 or 2 carbon atoms.

21. A process as defined in claim 16 wherein R₁ is an octadienyl group resulting from the butadiene telomerization reaction of salicylaldehyde in the presence of a palladium catalyst.

22. A process as defined in claim 1, wherein R₁ is saturated and said anionic phase transfer agent is selected from the group consisting of a quaternary ammonium, phosphonium, and sulfonium compound.

23. A process as defined in claim 1, wherein R₁ is unsaturated and said organic phase contains an anionic phase transfer agent selected from the group consisting of a quaternary ammonium, phosphonium and sulfonium compound.

24. A process as defined in claim 1, wherein R₁ is saturated and said organic phase contains a lower molecular weight oxime having from 7 to 12 carbon atoms.

25. An ether oxime having the formula 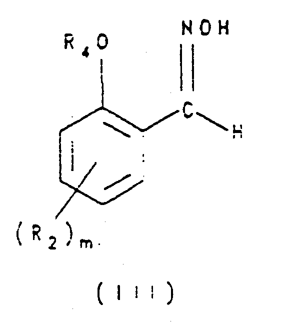 where R₄ is an alkadienyl group containing 8 to 16 carbon atoms, R₂ is a hydrocarbon group, halogen, or meta- or para-alkoxy group, and m is an integer of 0 to 4.

26. An ether oxime as defined in claim 25 wherein R₄ is octadienyl and m is 1.

27. An ether oxime as defined in claim 25 wherein R₄ and R₂ are octadienyl and m is 1.

28. An ether oxime as defined in claim 27 wherein said R₂ group is in a position ortho relative to the R₄O group.

29. An ether oxime according to claim 25 being 2-Octadienyloxybenzaldoxime.

30. An oxime selected from the group consisting of
p-(n-butyl)isobutyrophenone oxime
p-amylpropiophenone oxime
p-amylisobutyrophenone oxime
p-amyl(2-ethylhexanolphenone oxime
p-dodecylpropiophenone oxime
p-dodecylisobutyrophenone oxime
p-dodecyl(2-ethylhexano)phenone oxime.

31. A palladium chloride complex with an ether oxime of the formula 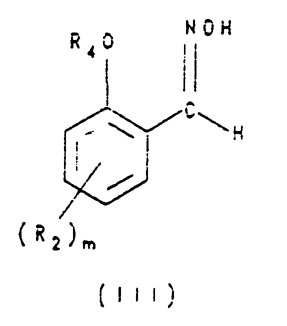 where R₄ is an alkadienyl group containing 8 to 16 carbon atoms, R₂ is a hydrocarbon group, halogen, or meta- or para-alkoxy group, and m is an integer of 0 to 4,
or of the formula 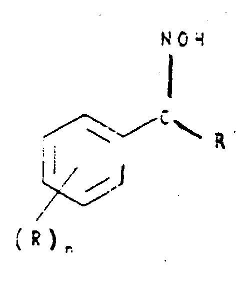 where R is a hydrocarbon group, halogen, or meta- or para- alkoxy group, n is an integer of 0 to 5, and R' is hydrogen, an aliphatic or aromatic hydrocarbon or aliphatic substituted aromatic group, and when aliphatic is unsubstituted or substituted with an hydroxy, alkoxy, ester or nitrile substitutent, and the total number of carbon atoms in said oxime is from 7 to 26.

32. A palladium chloride complex as defined in claim 31, wherein R₄ is an alkadienyl group containing 8 to 16 carbon atoms, R₂ is R₄ or a saturated or unsaturated, straight or branched chain, alkyl, cycloalkyl, aryl, aralkyl, alkoxy, aryloxy, or halogen group, and m is an integer of 0 to 4.

33. A palladium chloride complex as defined in claim 32. wherein R₄ is octadienyl and m is 1.

34. A palladium chloride complex as defined in claim 32, wherein R₄ and R₂ are octadienyl and m is 1.

35. A palladium chloride complex as defined in claim 34 wherein said R₂ group is in a position ortho relative to the R₄O group.

36. The palladium chloride complex as defined in claim 31, comprising 2-octadienyloxybenzaldoxime.

37. A palladium chloride complex as defined in claim 31 wherein the oxime is selected from the group consisting of
p-(n-butyl)isobutyrophenone oxime
p-amylpropiophenone oxime
p-amylisobutyrophenone oxime
p-amyl(2-ethylhexano)phenone oxime
p-dodecylpropiophenone oxime
p-dodecylisobutyrophenone oxime
p-dodecyl(2-ethylhexano)phenone oxime.

## Patentansprüche

1. Verfahren zur Gewinnung von Palladium aus einer wäßrigsauren Lösung desselben umfassend:
(a) In-Kontakt-Bringen der Palladium enthaltenden wäßrigsauren Lösung mit einer Lösung einer wasserunlöslichen Oxim-Verbindung in einem wasserunlöslichen und mit Wasser nicht mischbaren organischen Lösungsmittel während einer ausreichenden Zeitspanne, um die Palldium-Werte aus der wäßrigen Lösung zu extrahieren und zu übertragen, die zwei Phasen bildet, eine organische Phase (I), die die Palladium-Werte enthält, und eine wäßrige Phase (II), worin das Oxim ein nicht-phenolisches Aryloxim der Formel I 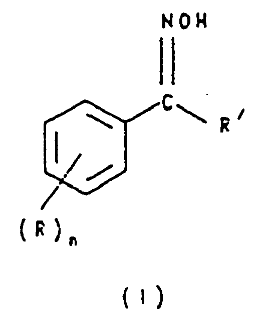 ist, worin
R eine Kohlenwasserstoff-Gruppe, Halogen- oder m- oder p-Alkoxygruppe ist, n eine ganze Zahl von 0 bis 5 ist und R' Wasserstoff, ein aliphatischer oder aromatischer Kohlenwasserstoff oder eine aliphatisch substituierte aromatische Gruppe ist, und wenn die aliphatische Gruppe unsubstituiert ist oder mit einem Hydroxy-, Alkoxy, Ester- oder Nitril-Substituenten substituiert ist, und die Gesamtzahl der Kohlenstoffatome in dem Oxim 7 bis 26 beträgt;
oder ein Etheroxim der Formel 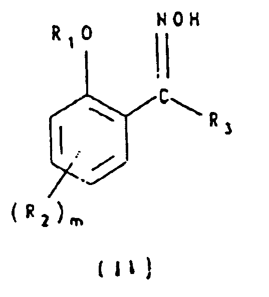 ist, worin
R₁ eine gesättigte oder ungesättigte Kohlenwasserstoff-Gruppe ist, R₂ eine Kohlenwasserstoff-Gruppe, Halogen- oder m- oder p- Alkoxygruppe ist, m eine ganze Zahl von 0 bis 4 ist und R₃ Wasserstoff, ein aliphatischer oder aromatischer Kohlenwasserstoff oder aliphatisch substituierte aromatische Gruppe ist, und wenn die aliphatische Gruppe unsubstituiert ist oder mit einem Hydroxy-, Alkoxy, Ester- oder Nitril-Substituenten substituiert ist, und die Geamtzahl der Kohlenstoffatome in R₁, R₂ und R₃ wenigstens 8 ist, und wenn R₁ nicht ungesättigt ist, das organische Lösungsmittel weiterhin ein Oxim von niedrigem Molekulargewicht mit 6 bis 12 Kohlenstoffatomen oder ein anionisches Phasenübertragungsmittel enthält;
(b) Abtrennen der nichtmischbaren organischen Phase (I) von der wäßrigen Phase (II);
(c) In-Kontakt-Bringen der organischen Phase (I) mit einer wäßrigen Ammoniaklösung, wobei die Paladiumwerte aus der organischen Phase (I) in die wäßrige Ammoniaklösung (III) entfernt oder extrahiert werden; (d) Abtrennen der organischen Phase (I) aus der wäßrigen Ammoniaklösung (III) und
(e) Gewinnen der Palladium-Werte aus der wäßrigen Ammoniaklösung (III).

2. Verfahren gemäß Anspruch 1, in welchem die organische Phase (I) der Stufe (b) vor der Stufe (c) gewaschen wird.

3. Verfahren gemäß Anspruch 1, in welchem das wasserunlösliche und mit Wasser nicht mischbare organische Lösungsmittel ein aliphatischer oder aromatischer Kohlenwasserstoff ist.

4. Verfahren gemäß Anspruch 3, worin das organische Lösungsmittel Kerosin ist.

5. Verfahren gemäß Anspruch 1, worin die Gesamtzahl an Kohlenstoffatomen in dem nicht-phenolischen Oxim 12 bis 26 ist.

6. Verfahren gemäß Anspruch 1, worin R' eine Alkylgruppe mit 1 bis 8 Kohlenstoffatomen und R eine Alkylgruppe mit 1 bis 12 Kohlenstoffatomen ist.

7. Verfahren gemäß Anspruch 6, worin das nicht-phenolische Oxim ausgewählt ist aus der Gruppe bestehend aus:
n-Butyrophenonoxim
2',4'-Dimethylacetophenonoxim
Isobutyrophenonoxim
p-(n-Butyl)isobutyrophenonoxim
p-Amylpropriophenonoxim
p-Amylisobutyrophenonoxim
p-Amyl(2-ethylhexano)phenonoxim
p-Dodecylacetophenonoxim
p-Dodecylpropriophenonoxim
p-Dodecylisobutyrophenonoxim
p-Dodecyl(2-ethylhexano)phenonoxim).

8. Verfahren gemäß Anspruch 1 oder 6, worin das organische Lösungsmittel weiterhin ein Modifikationsmittel enthält, ausgewählt aus der Gruppe bestehend aus Alkoholen, Phenolen und verzweigtkettigen Estern mit etwa 8 bis 30 Kohlenstoffatomen.

9. Verfahren gemäß Anspruch 8, worin das Modifikationsmittel Tridecanol ist.

10. Verfahren gemäß Anspruch 6, worin das organische Lösungsmittel weiterhin ein anionisches Phasenübertragungsmittel enthält, ausgewählt aus der Gruppe bestehend aus quarternären Ammonium-, Phosphonium- und Sulfonium-Verbindungen.

11. Verfahren gemäß Anspruch 1 oder 10, worin das anionische Phasenübertragungsmittel eine quarternäre Ammonium-Verbindung ist, die ein quarternäres Ammoniumion der Formel 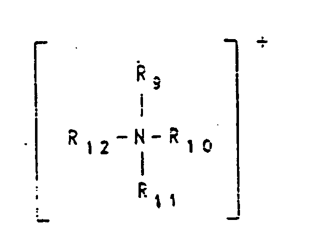 aufweist, worin R₉, R₁₀, R₁₁ und R₁₂ individuell aliphatische, araliphatische oder aromatische Kohlenwasserstoff-Gruppen sind, die 1 bis 22 Kohlenstoffatome haben, und worin die vier Gruppen zusammen ein Minimum von wenigstens 19 Kohlenstoffatomen haben und worin wenigstens drei der vier Gruppen wenigstens 4 Kohlenstoffatome aufweisen.

12. Verfahren gemäß Anspruch 11, worin die quarternäre Ammonium-Verbindung Methyltri(C₈-C₁₀)-Ammoniumchlorid ist.

13. Verfahren gemäß Anspruch 1, worin das nicht-phenolische Oxim insgesamt etwa wenigstens 14 Kohlenstoffatome enthält und das organische Lösungsmittel weiterhin ein Ketoxim oder Aldoxim von niedrigen Molekulargewicht mit 7 bis 12 Kohlenstoffatomen enthält.

14. Verfahren gemäß Anspruch 13, worin das Oxim von niedrigen Molekulargewicht 2-Ethylhexanaldoxim oder 4-Methylpropriophenonoxim ist.

15. Verfahren gemäß Anspruch 1, worin die Gesamtzahl an Kohlenstoffatomen in den Gruppen R₁, R₂ und R₃ 8 bis 24 ist.

16. Verfahren gemäß Anspruch 1, worin R₂ eine Alkyl- oder Alkadienyl-Gruppe mit 8 bis 16 Kohlenstoffatomen ist, R₁ eine Alkylgruppe mit 1 bis 16 Kohlenstoffatomen oder eine Alkadienyl-Gruppe mit 8 bis 16 Kohlenstoffatomen ist und R₃ Wasserstoff oder eine Alkylgruppe mit 1 bis 4 Kohlenstoffatomen ist.

17. Verfahren gemäß Anspruch 16, worin R₁ Methyl, R₂ Nonyl oder Dodecyl und R₃ H oder Methyl ist.

18. Verfahren gemäß Anspruch 16, worin R₁ Octadienyl, m 0 und R₃ H ist.

19. Verfahren gemäß Anspruch 16, worin R₁ und R₂ Octadienyl-Gruppen sind, R₃ H ist, R₂ sich in einer ortho-Position inbezug auf die R₁O-Gruppe befindet und m = 1 ist.

20. Verfahren gemäß Anspruch 16, worin R₁ und R₂ Octadienyl sind, R₂ eine Alkylgruppe mit 8 bis 12 Kohlenstoffatomen ist, m 1 ist und R₃ H oder eine Alkylgruppe mit 1 oder 2 Kohlenstoffatomen ist.

21. Verfahren gemäß Anspruch 16, worin R₁ eine Octadienylgruppe ist, die aus der Butadien-Telomerisationsreaktion von Salicylaldehyd in Gegenwart eines Palladium-Katalysators stammt.

22. Verfahren gemäß Anspruch 1, worin R₁ gesättigt ist und das anionische Phasenübertragungsmittel ausgewählt ist aus der Gruppe bestehend aus einer quarternären Ammonium-, Phosphonium- und Sulfonium-Verbindung.

23. Verfahren gemäß Anspruch 1, worin R₁ ungesättigt ist und die organische Phase ein anionisches Phasenübertragungsmittel enthält, ausgewählt aus der Gruppe bestehend aus einer quarternären Ammonium-, Phosphonium- und Sulfonium-Verbindung.

24. Verfahren gemäß Anspruch 1, worin R₁ gesättigt ist und die organische Phase ein Oxim von niedrigen Molekulargewicht mit 7 bis 12 Kohlenstoffatomen enthält.

25. Etheroxim der Formel 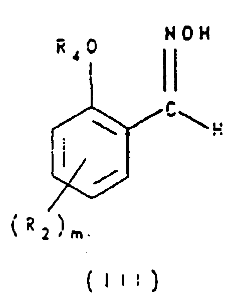 worin R₄ eine Alkadienylgruppe ist, enthaltend 8 bis 16 Kohlenstoffatome, R₂ eine Kohlenwasserstoff-Gruppe, Halogen- oder meta- oder para-Alkoxy-Gruppe ist und m eine ganze Zahl von 0 bis 4 ist.

26. Etheroxim gemäß Anspruch 25, worin R₄ Octadienyl ist und m 1 ist.

27. Etheroxim gemäß Anspruch 25, worin R₄ und R₂ Octadienyl sind und m 1 ist.

28. Etheroxim gemäß Anspruch 27, worin sich die R₂-Gruppe in einer ortho-Position relativ zu der R₄O-Gruppe befindet.

29. Etheroxim gemäß Anspruch 25, das 2-Octadienyloxybenzaldoxim ist.

30. Oxim ausgewählt aus der Gruppe bestehend aus:
p-(n-Butyl)isobutyrophenonoxim
p-Amylpropriophenonoxim
p-Amylisobutyrophenonoxim
p-Amyl(2-ethylhexano)phenonoxim
p-Dodecylpropriophenonoxim
p-Dodecylisobutyrophenonoxim
p-Dodecyl(2-ethylhexano)phenonoxim).

31. Palladiumchlorid-Komplex mit einem Etheroxim der Formel 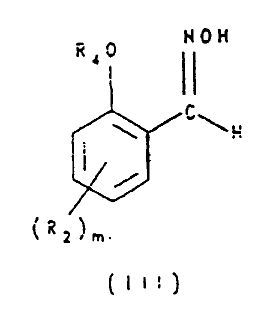 worin R₄ eine Alkadienylgruppe mit 8 bis 16 Kohlenstoffatomen ist, R₂ eine Kohlenwasserstoff-Gruppe, Halogen- oder meta- oder para-Alkoxy-Gruppe ist und m eine ganze Zahl von 0 bis 4 ist oder der Formel: 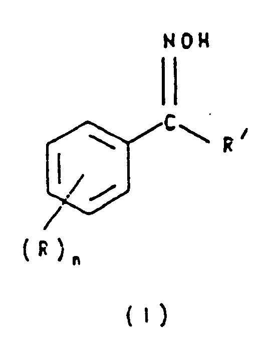 ist, worin
R eine Kohlenwasserstoff-Gruppe, Halogen- oder m- oder p-Alkoxygruppe ist, n eine ganze Zahl von 0 bis 5 ist und R' Wasserstoff, ein aliphatischer oder aromatischer Kohlenwasserstoff oder eine aliphatisch substituierte aromatische Gruppe ist, und wenn die aliphatische Gruppe unsubstituiert ist oder mit einem Hydroxy-, Alkoxy, Ester- oder Nitril-Substituenten substituiert ist, die Geamtzahl der Kohlenstoffatome in dem Oxim 7 bis 26 beträgt.

32. Palladiumchlorid-Komplex gemäß Anspruch 31, worin R₄ eine Alkadienylgruppe mit 8 bis 16 Kohlenstoffatomen ist, R₂ R₄ ist oder eine gesättigte oder ungesättigte, geradkettige oder verzweigtkettige Alkyl-, Cycloalkyl-, Aryl-, Aralkyl-, Alkoxy-, Aryloxy- oder Halogengruppe ist und m eine ganze Zahl von 0 bis 4 ist.

33. Palladiumchlorid-Komplex gemäß Anspruch 32, worin R₄ Octadienyl ist und m 1 ist.

34. Palladiumchlorid-Komplex gemäß Anspruch 32, worin R₄ und R₂ Octadienyl sind und m 1 ist.

35. Palladiumchlorid-Komplex gemäß Anspruch 34, worin sich die R₂-Gruppe in einer ortho-Position relativ zur R₄O-Gruppe befindet.

36. Palladiumchlorid-Komplex gemäß Anspruch 31, umfassend 2-Octadienyloxybenzaldoxim.

37. Palladiumchlorid-Komplex gemäß Anspruch 31, worin das Oxim ausgewählt ist aus der Gruppe bestehend aus
p-(n-Butyl)isobutyrophenonoxim
p-Amylpropriophenonoxim
p-Amylisobutyrophenonoxim
p-Amyl(2-ethylhexano)phenonoxim
p-Dodecylpropriophenonoxim
p-Dodecylisobutyrophenonoxim
p-Dodecyl(2-ethylhexano)phenonoxim).

## Revendications

1. Procédé pour la récupération du palladium à partir de sa solution acide aqueuse comprenant :
(a) la mise en contact de la solution acide aqueuse contenant le palladium avec une solution de composé oxime insoluble dans l'eau dans un solvant organique non miscible et insoluble dans l'eau pendant une durée suffisante pour extraire et transférer les valeurs de palladium à partir de la solution aqueuse formant deux phases, une phase organique (I) contenant les valeurs de palladium et une phase aqueuse (II) dans laquelle l'oxime est une oxime aryle non phénolique ayant la formule I 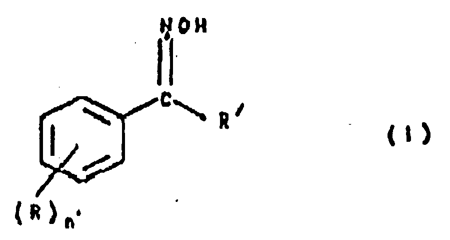 dans laquelle R est un groupe hydrocarbure, halogène ou un groupe méta- ou para- alcoxy, n est un nombre entier de 0 à 5 et R' est l'hydrogène, un hydrocarbure aliphatique ou aromatique ou un groupe aromatique substitué aliphatique et lorsqu'il s'agit d'un groupe aliphatique non substitué ou substitué avec un substituant hydroxy, alcoxy, éther ou nitrile et le nombre total d'atomes de carbone dans l'oxime va de 7 à 26 ;
ou une oxime éther ayant la formule 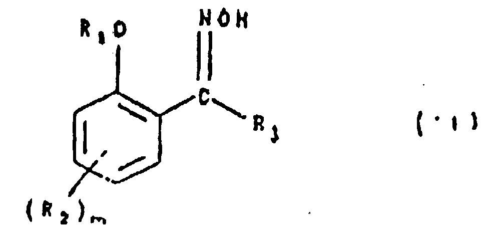 dans laquelle R₁ est un groupe hydrocarbure saturé ou insaturé, R₂ est un groupe hydrocarbure, halogène ou un groupe méta ou para alcoxy, m est un nombre entier de 0 à 4 et R₃ est l'hydrogène, un hydrocarbure aliphatique ou aromatique ou un groupe aromatique substitué aliphatique et lorsqu'il s'agit d'un groupe aliphatique, il est non substitué ou substitué par un substituant hydroxy, alcoxy, ester ou nitrile, le nombre total d'atomes de carbone dans R₁, R₂ et R₃ étant au moins 8 et lorsque R₁ est autre que non saturé, le solvant organique contient de plus une oxime à poids moléculaire plus faible ayant 6 à 12 atomes de carbone ou un agent de transfert de phase anionique ;
(b) séparation de la phase organique non miscible (I) de la phase aqueuse (II) ;
(c) mise en contact de la phase organique (I) avec une solution d'ammoniaque aqueuse permettant d'enlever ou d'extraire las voleurs de palladium de cette phase organique (I) dans la solution d'ammoniaque aqueuse (III) ;
(d) séparation de la phase organique (I) de la solution d'ammoniaque aqueuse (III) ; et
(e) récupération des valeurs de palladium de la solution d'ammoniaque aqueuse (III).

2. Procédé tel que défini dans la revendication 1, dans lequel la phase organique (I) de l'étape (b) est lavée avant l'étape (c).

3. Procédé tel que défini dans la revendication 1, dans lequel le solvant organique non miscible et insoluble dans l'eau est un hydrocarbure aliphatique ou aromatique.

4. Procédé tel que défini dans la revendication 3, dans lequel le solvant organique est le kérosène.

5. Procédé tel que défini dans la revendication 1, dans lequel le nombre total d'atomes de carbone dans cette oxime non phénolique est de 12 à 26.

6. Procédé tel que défini dans la revendication 1, dans lequel R' est un groupe alkyle ayant de 1 à 8 atomes de carbone et R est un groupe alkyle ayant de 1 à 12 atomes de carbone.

7. Procédé tel que défini dans la revendication 6, dans lequel l'oxime non phénolique est choisie dans le groupe constitué par
n-butyrophénone oxime
2'-4'-diméthylacétophénone oxime
isobutyrophénone oxime
p-(n-butyl)isobutyrophénone oxime
p-amylpropiophénone oxime
p-amylisobutyrophénone oxime
p-amyl(2-éthylhexano)phénone oxime
p-dodécylacétophénone oxime
p-dodécylpropiophénone oxime
p-dodécylisobutyrophénone oxime
p-dodécyl(2-éthylhexano)phénone oxime.

8. Procédé tel que défini dans la revendication 1 ou 6, dans lequel le solvant organique contient de plus un agent modifiant choisi dans la groupe constitué par des alcools, des phénols et des esters à chaîne ramifiée ayant environ de 8 à 30 atomes de carbone.

9. Procédé tel que défini dans la revendication 8, dans lequel l'agent modifiant est le tridécanol.

10. Procédé tel que défini dans la revendication 6, dans lequel le solvant organique contient du plus un agent de transfert en phase anionique choisi dans le groupe constitué par des composés d'ammonium quaternaire de phosphonium et de sulfonium.

11. Procédé tel que défini dans la revendication 1 ou 10, dans lequel l'agent de transfert anionique est un composé d'ammonium quaternaire ayant un ion d'ammonium quaternaire de le formule 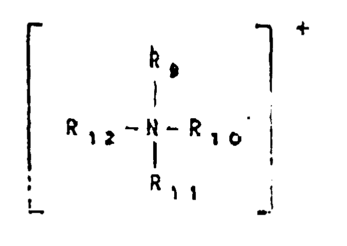 dans laquelle R₉, R₁₀, R₁₁ et R₁₂ individuellement sont des groupes d'hydrocarbure aliphatiques, araliphatiques ou aromatiques ayant de 1 à 22 atomes de carbone et où les quatre groupes ont ensemble un minimum d'au moins 19 atomes de carbone et où au moins trois des quatre groupes ont au moins 4 atomes de carbone.

12. Procédé tel que défini dans la revendication 11, dans lequel le composé d'ammonium quaternaire est le chlorure de méthyltri(C₈-C₁₀)ammonium.

13. Procédé tel que défini dans la revendication 1, dans lequel l'oxime non phénolique contient un total d'au moins 14 atomes de carbone et le solvant organique contient de plus une cétoxime de poids moléculaire inférieur ou une aldoxime ayant de 7 à 12 atomes de carbone.

14. Procédé tel que défini dans la revendication 13, dans lequel l'oxime de poids moléculaire inférieur est la 2-éthylhexanaldoxime ou la 4-méthylpropiophénone oxime.

15. Procédé tel que défini dans la revendication 1, dans lequel le nombre total d'atomes de carbone dans les groupes R₁, R₂ et R₃ est de 8 à 24.

16. Procédé tel que défini dans la revendication 1, dans lequel R₂ est un groupe alkyle ou alcadiényle de 8 à 12 atomes de carbone, R₁ est un groupe alkyle ayant de 1 à 16 atomes de carbone ou un groupe alcadiényle ayant de 8 à 16 atomes de carbone et R₃ est l'hydrogène ou un groupe alkyle ayant de 1 à 4 atomes de carbone.

17. Procédé tel que défini dans la revendication 16, dans lequel R₁ est le méthyle, R₂ est nonyle ou dodécyle et R₃ est H ou méthyle.

18. Procédé tel que défini dans la revendication 16, dans lequel R₁ est octadiényle, m est égal à 0 et R₃ est H.

19. Procédé tel que défini dans la revendication 16, dans lequel R₁ et R₂ sont des groupes octadiényle, R₃ est H, R₂ est dans une position ortho par rapport au groupe R₁O et m = 1.

20. Procédé tel que défini dans la revendication 16, dans lequel R₁ est octadiényle, R₂ est un groupe alkyle ayant de 8 à 12 atomes de carbone, m est égal à 1 et R₃ est H ou un groupe alkyle ayant de 1 à 2 atomes de carbone.

21. Procédé tel que défini dans la revendication 16, dans lequel R₁ est un groupe octadiényle résultant de la réaction de télomérisation du butadiène de salicylaldéhyde en présence d'un catalyseur au palladium.

22. Procédé tel que défini dans le revendication 1, dans lequel R₁ est saturé et l'agent de transfert de phase anionique est choisi dans le groupe constitué par un composé d'ammonium quaternaire, de phosphonium et de sulfonium.

23. Procédé tel que défini dans la revendication 1, dans lequel R₁ est non saturé et la phase organique contient un agent de transfert de phase anionique choisi dans le groupe constitué par un composé d'ammonium quaternaire, de phosphonium et de sulfonium.

24. Procédé tel que défini dans la revendication 1, dans lequel R₁ est saturé et la phase organique contient une oxime de poids moléculaire inférieur de 7 à 12 atomes de carbone.

25. Oxime d'éther ayant le formule 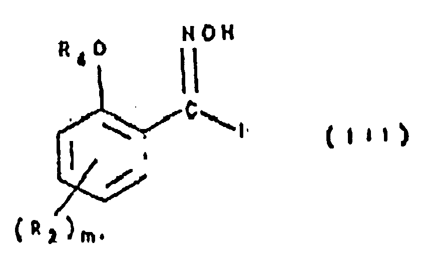 dans laquelle R₄ est un groupe alcadiényle contenant de 8 à 16 atomes de carbone, R₂ est un groupe hydrocarbure halogène ou un groupe méta- ou para alcoxy et m est un nombre entier de 0 à 4.

26. Oxime d'éther telle que définie dans la revendication 25, dans laquelle R₄ est octadiényle et m est égal à 1.

27. Oxime d'éther telle que définie dans la revendication 25, dans laquelle R₄ et R₂ sont octadiényle et m est égal à 1.

28. Oxime d'éther telle que définie dans la revendication 27, dans laquelle le groupe R₂ est dans une position ortho par rapport au groupe R₄O.

29. Oxime d'éther selon la revendication 25 qui est la 2-octadiényloxybenzaldoxime.

30. Oxime choisie dans le groupe constitué par
p-(n-butyl)isobutyrophénone oxime
p-amylpropiophénone oxime
p-amylisobutyrophénone oxime
p-amyl(2-éthylhexano)phénone oxime
p-dodécylpropiophénone oxime
p-dodécylisobutyrophénone oxime
p-dodécyl(2-éthylhexano)phénone oxime.

31. Complexe de chlorure de palladium avec une oxime d'éther de la formule 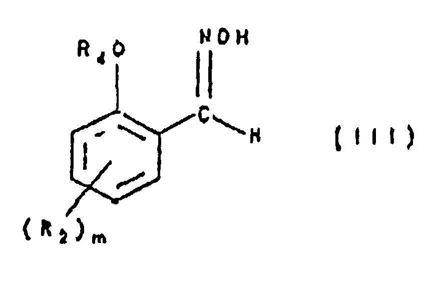 dans laquelle R₄ est un groupe alcadiényle contenant 8 à 16 atomes de carbone, R₂ est un groupe d'hydrocarbure halogène ou un groupe méta ou para alcoxy et m est un nombre entier de 0 à 4,
ou de la formule 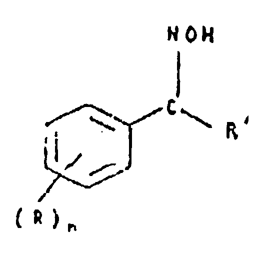 dans laquelle R est un groupe d'hydrocarbure halogène ou un groupe méta ou para alcoxy, m est un nombre entier de 0 à 5 et R' est l'hydrogène, un hydrocarbure aliphatique ou aromatique ou un groupe aromatique substitué aliphatique et lorsqu'il s'agit d'un groupe aliphatique, il est non substitué ou substitué par un substituant hydroxy, alcoxy, ester ou nitrile, et le nombre total d'atomes de carbone dans cette oxime est de 7 à 26.

32. Complexe de chlorure de palladium tel que défini dans la revendication 31, dans lequel R₄ est un groupe alcadiényle contenant 8 à 16 atomes de carbone, R₂ est R₄ ou un groupe halogène, aryloxy, alcoxy, aralkyle, aryle, cycloalkyle ou alkyle à chaîne linéaire ou ramifiée et m est un nombre entier de 0 à 4.

33. Complexe de chlorure de palladium tel que défini dans la revendication 32, dans lequel R₄ est octadiényle et m est égal à 1.

34. Complexe de chlorure de palladium tel que défini dans la revendication 32, dans lequel R₄ et R₂ sont octadiényle et m est égal à 1.

35. Complexe de chlorure de palladium tel que défini dans la revendication 34, dans lequel le groupe R₂ est dans une position ortho par rapport au groupe R₄O.

36. Complexe de chlorure de palladium tel que défini dans la revendication 31, comprenant la 2-octadiényloxybenzaldoxime.

37. Complexe de chlorure de palladium tel que défini dans la revendication 31, dans lequel l'oxime est choisie dans le groupe constitué par
p-(n-butyl)isobutyrophénone oxime
p-amylpropiophénone oxime
p-amylisobutyrophénone oxime
p-amyl(2-éthylhexano)phénone oxime
p-dodécylpropiophénone oxime
p-dodécylisobutyrophénone oxime
p-dodécyl(2-éthylhexano)phénone oxime.
